# EUROPEAN PATENT APPLICATION

(11) **EP 0 953 397 A2**
(43) Date of publication of application: **03.11.1999**
(21) Application number: 99103638.5
(22) Date of filing: 25.02.1999
(51) Int. Cl.: B23K 9/10

(54) **Welding plant and associated components, with centralised generator and switching conversion devices decentralised on mobile unit**

(30) Priority: 27.04.1998 IT VI980083
(71) Applicant: Esseti S.r.l., 36030 Costabissara VI (IT)
(72) Inventor: Terzo, Maurizio, 36100 Vicenza (IT)
(74) Representative: La Ciura, Salvatore

(57) **Abstract**

This invention relates to a welding plant and associated components which comprises (i) a central generator from which a low-voltage power cable leads to a working area and (ii) a number of terminals designed to be connected to the said main power cable, each of which terminals being equipped with an independent power unit fitted with systems designed to regulate the voltage and current required for the various welding operations.

As a result the generator, in which high voltages are present, can be isolated by locating it in a safety area, and low-voltage energy can be conveyed by a simplified, cheap distribution system which still achieves high efficiency due to the use of electronic conversion systems.

## Description

This invention relates to a welding plant and associated components which comprises a separate generator located in a safety zone at a distance from the welding stations and a plurality of welding sets, each containing a switching conversion system, which are decentralised on mobile units all connected to the same cable leading from said generator.

As a result the generator, in which high voltages are provided, can be isolated by locating it in a safety area, and low-voltage energy can be conveyed by a simplified, cheap distribution system which still achieves high efficiency due to the use of electronic conversion systems.

For the reasons set out above, the welding plant according to the invention has a particularly useful application on building sites, and especially in shipyards, where numerous welding units are used simultaneously.

As known, in situations in which welding is used intensively, as in the case of shipyards, significant safety problems arise because welding machines are powered by high voltage, with consequent risks for the operators.

Regulations actually restrict the positioning of welding machine generators in areas in which large ferrous masses are present or where it may be dangerous to work with high voltages because of the presence of moisture or the like.

For this reason, the generator is usually placed at a distance from the working area, and sheaves of cables, often several dozen metres long, are used to convey current to the welding sets. However, this involves voltage drops along the cables, with consequent losses of power, and the need for thorough maintenance of the cables and equipment.

To solve this problem, plants have been provided in which the power supply system is centralised in a single large power plant including the high-power transformer and the rectification system. A single cable leads from the power plant to the structure to be welded, and the operators connect their welding sets, each of which comprises a box with a set of resistors, to the cable. The output voltage required for the work to be done is obtained by selecting the resistors.

However, this system has also been abandoned, mainly due to the high electricity consumption caused by the considerable losses of power inherent in the system, with which the efficiency of welding machines rarely exceeds 15-20%.

With the widespread introduction of MIG-MAG welding technologies, it has also become necessary to use additional cables, such as signal cables, cables for auxiliary devices, etc., with the result that the sheaf of cables connecting the generator to the remote unit is much larger than those used for simple arc welding, thus substantially increasing the problems involved.

Industry is still seeking a solution to this problem. For this purpose, the present invention provides a plant in which the line voltage is converted to safety voltage for welding by a single basic converter placed at a distance from the operating area and the low-value direct voltage output of which powers various workstations, each of which includes a decentralised regulation unit.

These units are independent of one another and perform the voltage and current regulation functions together with all auxiliary functions; they are powered by switching converters connected to the main power cable leading from the generator output.

In this case two advantages are obtained: the main generator can be placed at a distance from the workplace and does not need to produce high voltages, unlike the conventional system, in which the output voltage from the generator must be sufficient to compensate for voltage drops in the regulation boxes of the individual welding sets.

Greater efficiency is obtained with the use of switching converters, such as transistorised converters, and the equipment is lighter and cheaper.

In practice, the plant in accordance with the invention comprises a power plant consisting of the generator, which is common to a number of workstations, and a plurality of identical, independent remote workstations which can be distributed over the structure to be welded.

This invention will now be described in detail, by way of non restrictive example, with reference to the accompanying drawings in which:
- figure 1 schematically shows a plant according to the invention;
- figure 2 is a block diagram of a conversion unit used in the plant in accordance with the invention.

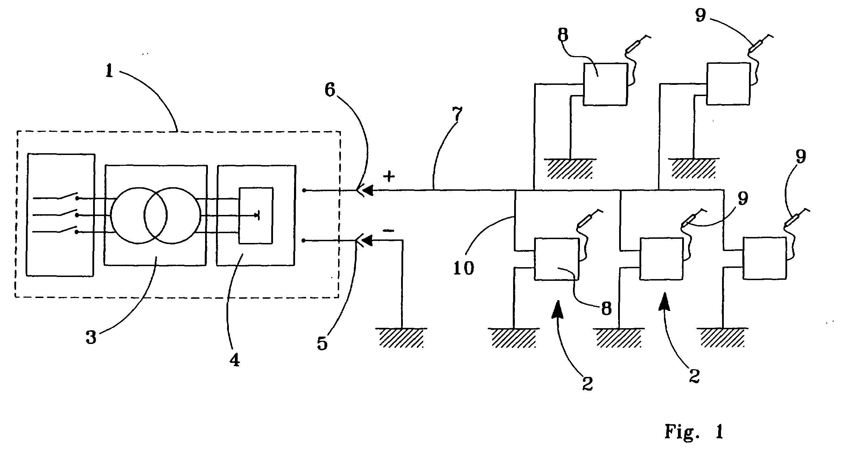

With reference to figure 1, the plant of the invention comprises a generator, shown as 1, and a plurality of independent welding stations, each shown as 2.

The generator is of a known type, comprising, for example, a high-power transformer and a rectification assembly shown as 4.

One output of the generator, such as the negative output shown as 5, is earthed, whereas the second output 6, usually the positive output, is connected to a main power cable shown as 7, which runs to the working area.

This cable has a capacity of several hundred amps, sufficient to power all the welding stations, and a safety voltage usually not exceeding 42 volts.

The various stations 2 are connected to cable 7; each of said stations consisting of a power unit 8 fitted with a welding torch 9 and connected via its cable 10 to the main power cable 7.

The invention is characterized in that all power units 8 are independent; each of them comprising electronic means for regulating the current and voltage for welding and for all auxiliary functions, and being powered directly by cable 7 leading from the output of the main generator.

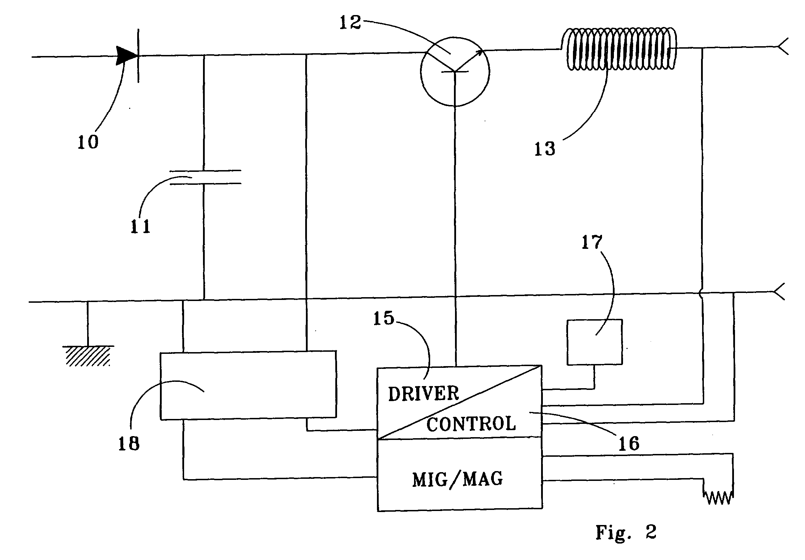

Each power unit comprises for example (see figure 2) an input diode 10, a filter 11, a switching component 12, for example a transistor, as in the case shown in the figure, and a damping inductor 13 to damp the signal which travels to an output pole 14. The switching element control system is based on the negative feedback of the two output quantities, I and V.

The control system comprises a driver 15, common to all the power units, and a control system 16, which can be of a known type and can differ from one power unit to another, depending on the functions to be performed.

For example, in a basic version, the control system 16 can merely perform a simple function such as controlling arc-welding current, whereas in a similar but improved system, the control 16 can also perform the additional motor control function for MIG-MAG welding.

As a result, this power unit constitutes a kind of dedicated interface able to power the various welding terminals.

Numeral 17 in figure 2 indicates a current probe, whereas numeral 18 indicates a power module which, starting from the voltage available in the main cable 7, powers the various modules connected thereto, each with the required voltage.

Basically, the control system 16 ensures that the two output quantities (voltage and current) each time meet the requirements of the current welding application. By exploiting this electronic system, it is also possible to modify and update existing plants, converting the terminals connected to the basic generator into independent generators powered by a single low-voltage cable.

To perform welding operations, each operator merely needs to connect his/her terminal to the main power cable and then can operate independently from the others, in total safety.

An expert in the field can provide numerous modifications and variations, all of which, however, fall within the scope of the invention.

## Claims

1. A welding plant, characterised in that it comprises a central generator from which a low-voltage power cable leads to a working area and a plurality of terminals to be connected to said main power cable, each of said terminals being provided with an independent power unit having means for adjusting the voltage and current required for the various welding operations.

2. A welding plant according to claim 1, characterised in that said terminals are decentralised on mobile units and each of them comprises electronic conversion devices of the switching type.

3. A welding plant and associated components, with a separate generator and switching conversion systems decentralised on mobile units, as described and illustrated.
